# EUROPÄISCHE PATENTSCHRIFT

(11) **EP 0 695 262 B1**
(45) Veröffentlichungstag und Bekanntmachung des Hinweises auf die Patenterteilung: **23.07.1997**
(21) Anmeldenummer: 95910517.2
(22) Anmeldetag: 23.02.1995
(51) Int. Cl.: B65C 9/22, G01B 11/02

(54) **ETIKETTIERMASCHINE FÜR GEGENSTÄNDE**
MACHINE FOR LABELLING OBJECTS
ETIQUETEUSE D'OBJETS

(30) Priorität: 28.02.1994 DE 9403367 U
(43) Veröffentlichungstag der Anmeldung: 07.02.1996
(73) Patentinhaber: KRONES AG Hermann Kronseder Maschinenfabrik, D-93068 Neutraubling (DE)
(72) Erfinder: SCHNEIDER, Egon, D-93073 Neutraubling (DE)
(74) Vertreter: Grünecker, Kinkeldey, Stockmair & Schwanhäusser Anwaltssozietät
(86) Internationale Anmeldenummer: EP9500663
(87) Internationale Veröffentlichungsnummer: WO9523093

(56) Entgegenhaltungen:
- DE-A- 3 826 024
- DE-A- 3 843 300
- DE-U- 8 300 012
- US-A- 4 456 379

## Beschreibung

Die Erfindung bezieht sich auf eine Etikettiermaschine für Gegenstände gemäß dem Oberbegriff des Anspruchs 1.

Aus dem deutschen Patent 26 32 332 ist bereits eine Etikettiermaschine mit einer Leimwalze und einer relativ zu dieser verstellbar angeordneten Leimleiste zur Regulierung der Leimfilmdicke bekannt, wobei der Leimleiste ein Stellmotor zugeordnet ist, mit dessen Hilfe in bestimmten Betriebssituationen die Leimfilmdicke reduzierbar ist.

Bezugnehmend auf dieses Patent wird durch das deutsche Gebrauchsmuster 83 00 012 auch schon vorgeschlagen, die auf der Leimwalze vorhandene Leimbelagsdicke mittels eines Fühlers zu erfassen. Weicht der festgestellte Wert der Leimbelagsdicke von einem vorgebbaren Sollwert ab, kann eine entsprechende Korrektur der Spaltgröße zwischen dem Leimschaber und der Leimwalze vorgenommen werden. Wie eine Änderung der Leimbelagsdicke auf der Leimwalze erfaßt werden kann, wird nicht angegeben.

Der Erfindung liegt die Aufgabe zugrunde, eine Etikettiermaschine mit einer Beleimungseinrichtung der eingangs genannten Art anzugeben, deren auf der Leimwalze vorhandene Leimfilmdicke genau und betriebssicher ermittelt wird.

Gelöst wird diese Aufgabe durch die im kennzeichnenden Teil des Anspruchs 1 angegebenen Merkmale.

Mit Hilfe der vorgeschlagenen Meßeinrichtung ist eine sehr exakte Erfassung der Leimfilmdicke möglich. Auf diese Weise kann die optimale Leimfilmdicke genau eingestellt und fortwährend im Betrieb überwacht werden, wodurch ein geringer Verbrauch sichergestellt wird. Die berührungslos mit einem tangential zur Leimwalzenoberfläche ausgerichteten Laserstrahl arbeitende Meßeinrichtung ist vorteilhafterweise weitgehend unempfindlich gegen betriebsbedingte Einflüsse, da sowohl der Sender als auch der Empfänger mit einigem Abstand zur leimbeschichteten Leimwalze angeordnet werden können und somit kaum durch evtl. von der Leimwalze abspritzenden Leim verschmutzt werden.

Bei Etikettiermaschinen mit einer senkrecht stehend angeordneten Leimwalze ist es besonders vorteilhaft, Sender und Empfänger oberhalb der den Leim von der Leimwalze abnehmenden Flächen (umlaufende Leimpaletten, zu beleimende Gefäße etc.), insbesondere nahe am oberen Ende der Leimwalze, zu installieren.

Zur Einhaltung einer genau fluchtenden Ausrichtung von Sender und Empfänger ist es von Vorteil, wenn diese von einem gemeinsamen, vorzugsweise einstückigen Träger gehalten oder von einem gemeinsamen Gehäuse aufgenommen werden.

Weitere vorteilhafte Ausbildungen der Neuerung sind Gegenstand der Unteransprüche.

Nachfolgend wird eine Ausführung anhand der Fig. erläutert. Es zeigt:
- Fig. 1: eine Leimwalze mit zugeordneter Meßeinrichtung in Draufsicht in einer schematischen Darstellung und
- Fig. 2: eine Seitenansicht eines Etikettieraggregats mit auf einem Rotor angeordneten, steuerbaren Haftflächen zur Etikettenentnahme.

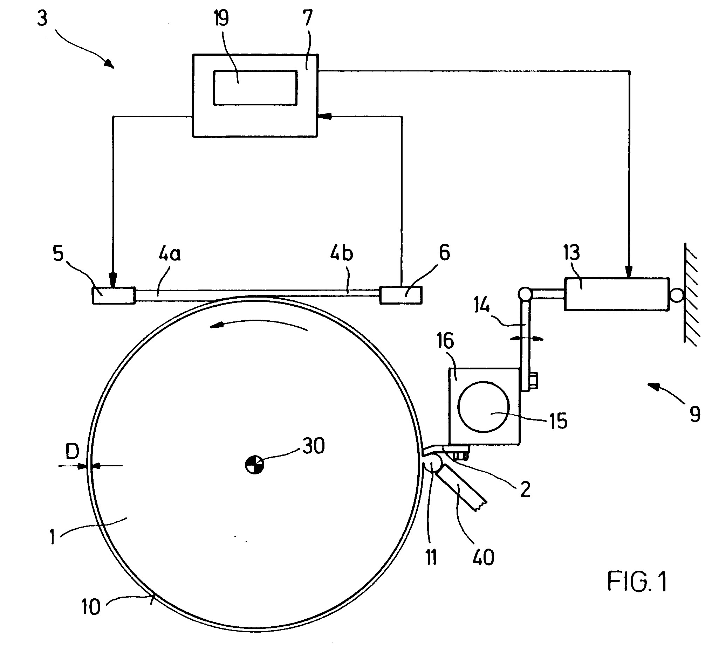

Die in Fig. 1 dargestellte Leimwalze 1 ist drehbar gelagert und wird gegen den Uhrzeigersinn angetrieben. In an sich bekannter Weise wird durch ein Rohr 40 dem oberen Ende der lotrecht angeordneten Leimwalze 1 kontinuierlich Leim -in Umlaufrichtung gesehen- vor einer einstellbaren Leimleiste 2 zugeführt. Da mehr Leim zugeführt als verbraucht wird, bildet sich vor der Leimleiste 2 eine rotierende Leimwurst 11, die bis zum unteren Ende der Leimwalze reicht, wobei deren abtropfender Rest aufgefangen und in einen nicht dargestellten Leimvorratsbehälter zurückgeführt wird.

Zur Justierung der Leimfilmdicke D kann der Spalt zwischen der der Leimwalze 1 zugewandten Seite der Leimleiste 2 und der Mantelfläche 10 der Leimwalze durch Verschwenken der Leimleiste verändert werden. Die Verstellung erfolgt durch eine Betätigungseinrichtung 9, die bei der dargestellten Ausführung einen steuerbaren Stellantrieb 13 umfaßt. Der Stellantrieb 13 ist über einen Ausleger 14 mit einem um eine feststehende Achse 15 schwenkbaren Klotz 16 verbunden, an dem auch die Leimleiste 2 austauschbar befestigt ist.

Zur Erfassung der Leimfilmdicke D auf der Mantelfläche 10 der Leimwalze ist ein Rotlichtlaser 5 und diesem fluchtend gegenüberliegend ein Fotoempfänger 6 tangential zur Mantelfläche angeordnet. Mit zunehmender Leimfilmdicke wird ein immer größerer Teil des vom Laser 5 ausgehenden, parallelen Strahles 4a abgedeckt, wobei die Dicke oder Breite des verbleibenden, beim Fotoempfänger 6 ankommenden Strahles 4b dementsprechend abnimmt. In Abhängigkeit des am Fotoempfänger 6 ankommenden Strahles 4b wird von der mit dem Laser 5 und dem Fotoempfänger 6 in Verbindung stehenden Auswerteinrichtung 7 ein der Leimfilmdicke D entsprechendes Meßsignal abgegeben.

Dieses Meßsignal wird zur Steuerung des Stellantriebes 13 verwendet, um die Leimfilmdicke auf einen bestimmten, vorgebbaren Wert unabhängig von äußeren Betriebseinflüssen einzuregeln. Es ist aber auch denkbar, die Einstellung der Leimfilmdicke manuell mit einer von Hand bedienbaren Betätigungseinrichtung (Stellschraube o.ä.) an der Leimleiste vorzunehmen. In so einem Fall genügt eine optische Anzeige 19 des festgestellten Meßwertes an der Auswerteinrichtung 7.

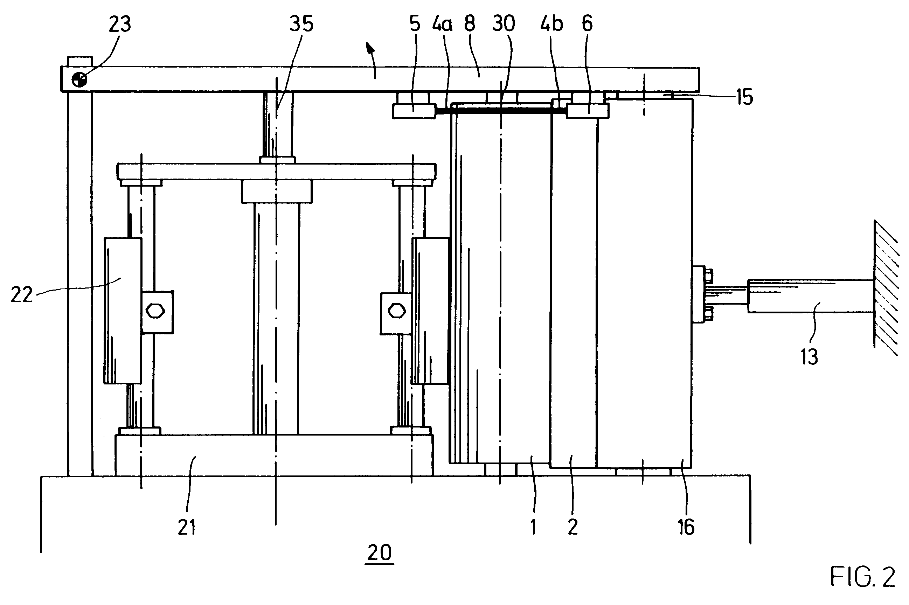

Wie aus der Fig. 2 ersichtlich ist, können der Lasersender 5 und der Fotoempfänger 6 von einem gemeinsamen, einstückigen Träger 8 gehalten werden. Bei dem dargestellten Etikettieraggregat 20 mit auf einem Rotor 21 angeordneten, zwangsgesteuerten, während eines Umlaufs vorzugsweise oszillierenden Paletten 22 dient der Träger 8 zugleich als Lagerbrücke für die Leimwalze 1, die Drehachse 35 des Rotors 21 und die starre Achse 15 des als Leimleistenträger dienenden Klotzes 16. Die Lagerbrücke 8 kann zum Entnehmen der Leimwalze 1, des Klotzes 16 mit der Leimleiste 2 und der Paletten 22 um eine ortsfeste, horizontal ausgerichtete Lagerachse 23 nach oben geschwenkt werden. Diese Lagerachse 23 ist in nicht näher dargestellter Weise starr mit dem Gehäuse des Etikettieraggregats verbunden. Der Lasersender 5 und der Fotoempfänger 6 sind an der Unterseite der Lagerbrücke 8 gegenüberliegend zueinander fluchtend ausgerichtet befestigt, derart, daß der vom Lasersender 5 ausgehende Meßstrahl 4a in der dargestellten Betriebsstellung der Lagerbrücke 8 die Mantelfläche 10 der Leimwalze 1 tangiert.

Besonders genaue Resultate sind bei Verwendung von Stahlleimwalzen, insbesondere mit hartverchromter Oberfläche möglich.

## Patentansprüche

1. Etikettiermaschine für Gegenstände, insbesondere Gefäße, wie Flaschen oder dgl., mit einer Beleimungseinrichtung, die eine rotierende Leimwalze (1), eine Leimauftragseinrichtung mit einer die Leimfilmdicke (D) auf der Leimwalze bestimmenden, relativ zur Leimwalze einstellbaren Leimleiste (2) und eine die Leimfilmdicke (D) auf der Leimwalze erfassende Meßeinrichtung (3) aufweist, dadurch gekennzeichnet, daß die Meßeinrichtung (3) einen Sender (5), einen Empfänger (6) und eine Auswerteinrichtung (7) umfaßt, und daß die Leimfilmdicke (D) durch einen tangential zur Mantelfläche (10) der Leimwalze (1) ausgerichteten Meßstrahl (4a, b) berührungslos feststellbar ist.

2. Maschine nach wenigstens einem der vorhergehenden Ansprüche, dadurch gekennzeichnet, daß der Sender (5) als Meßstrahl (4a, b) einen Laserstrahl, insbesondere Rotlicht-Laserstrahl, aussendet.

3. Maschine nach wenigstens einem der vorhergehenden Ansprüche, dadurch gekennzeichnet, daß der nach dem Passieren der Leimwalze (1) verbleibende Teil (4b) des vom Sender (5) ausgehenden Meßstrahls (4a), insbesondere Laserstrahl, von einem Fotoempfänger (6) aufgenommen wird.

4. Maschine nach wenigstens einem der vorhergehenden Ansprüche, dadurch gekennzeichnet, daß der Sender (5) und Empfänger (6) auf einer Achse gegenüberliegend angeordnet sind und vorzugsweise von einem gemeinsamen Träger (8) gehalten werden.

5. Maschine nach wenigstens einem der vorhergehenden Ansprüche, dadurch gekennzeichnet, daß der Sender (5) und Empfänger (6) nahe an einem Ende der Leimwalze (1) angeordnet sind, bei einer lotrecht stehenden Leimwalze vorzugsweise nahe dem oberen Ende.

6. Maschine nach wenigstens einem der vorhergehenden Ansprüche, dadurch gekennzeichnet, daß die mit dem Sender (5) und Empfänger (6) verbundene Auswerteinrichtung (7) die erfaßte Leimfilmdicke (D) anzeigt und/oder ein der Leimfilmdicke (D) entsprechendes Signal, insbesondere Analogsignal, abgibt.

7. Maschine nach wenigstens einem der vorhergehenden Ansprüche, dadurch gekennzeichnet, daß der Leimleiste (2) eine Betätigungseinrichtung (9) zur Einstellung des freien Spaltes zwischen der Mantelfläche (10) der Leimwalze (1) und der Leimleiste (2) zugeordnet ist, wobei vorzugsweise eine Regelung der Spaltweite in Abhängigkeit der festgestellten Leimfilmdicke (D) erfolgt.

8. Maschine nach wenigstens einem der vorhergehenden Ansprüche, dadurch gekennzeichnet, daß die Dicke des vom Sender (5) ausgehenden Meßstrahls (4a) mindestens dem im Betrieb der Etikettiermaschine zulässigen Einstellbereich der Leimfilmdicke (D) entspricht.

9. Maschine nach wenigstens einem der vorhergehenden Ansprüche, dadurch gekennzeichnet, daß der radiale Abstand des Meßstrahles (4a, b) zur Drehachse (30) der Leimwalze (1) einstellbar ist.

## Claims

1. Labelling machine for objects, especially vessels such as bottles or the like, having a gumming device which has a rotating gumming roller (1), a gum applying device with a gum strip (2), adjustable relative to the gumming roller, for determining the gum film thickness (D) on the gumming roller, and a measuring device (3) for determining the gum film thickness (D) on the gumming roller, **characterised** in that the measuring device (3) comprises a transmitter (5), a receiver (6) and an evaluating device (7), and that the gum film thickness (D) can be determined without touching by a measuring beam (4a, b) directed tangentially to the surface area (10) of the gumming roller (1).

2. Machine according to at least one of the preceding claims, **characterised** in that the transmitter (5) transmits as the measuring beam (4a, b) a laser beam, especially a red light laser beam.

3. Machine according to at least one of the preceding claims, **characterised** in that the portion (4b) of the measuring beam (4a), especially laser beam, emanating from the transmitter (5) which remains after passage of the gumming roller (5) is picked up by a photo cell (6).

4. Machine according to at least one of the preceding claims, **characterised** in that the transmitter (5) and the receiver (6) are arranged on an axis oppositely to one another and held preferably by a common carrier (8).

5. Machine according to at least one of the preceding claims, **characterised** in that the transmitter (5) and the receiver (6) are arranged close to one end of the gumming roller (1), near the top end in the case of a perpendicularly arranged gumming roller.

6. Machine according to at least one of the preceding claims, **characterised** in that the evaluating device (7) linked to the transmitter (5) and the receiver (6) displays the determined gum film thickness (D) and/or delivers a signal, especially analogue signal, corresponding to the gum film thickness (D).

7. Machine according to at least one of the preceding claims, **characterised** in that the gum strip (2) is associated with an operating device (9) for adjusting the free gap between the surface area (10) of the gumming roller (1) and the gum strip (2), this preferably resulting in a control of the gap width as a function of the determined gum film thickness (D).

8. Machine according to at least one of the preceding claims, **characterised** in that the thickness of the measuring beam (4a) emanating from the transmitter (5) corresponds at least to the adjusting range of the gum film thickness (D) permitted for the operation of the labelling machine.

9. Machine according to at least one of the preceding claims, **characterised** in that the radial distance of the measuring beam (4a, b) from the rotating shaft (30) of the gumming roller (1) can be adjusted.

## Revendications

1. Etiqueteuse d'objets, de récipients en particulier,tels que bouteilles, ou autres, comportant un dispositif d'encollage qui présente un cylindre encolleur (1) rotatif, un dispositif d'application de colle avec une spatule (2), qui définit l'épaisseur (D) du film de colle sur le cylindre et est réglable par rapport à ce dernier, ainsi qu'un dispositif de mesure (3), qui détecte l'épaisseur de film (D) sur le cylindre d'encollage, caractérisée en ce que le dispositif de mesure (3) comporte un émetteur (5), un récepteur (6) et un dispositif d'analyse (7), et en ce que l'épaisseur (D) du film de colle est déterminable sans contact par un rayon de mesure (4a, b), dirigé tangentiellement par rapport à la surface d'enveloppe (10) du cylindre d'encollage (1).

2. Etiqueteuse suivant la revendication 1, caractérisée en ce que le rayon de mesure (4a, b), émis par l'émetteur (5), est un rayon laser, un rayon laser à lumière rouge en particulier.

3. Etiqueteuse suivant l'une au moins des revendications précédentes, caractérisée en ce que la part (4b) du rayon de mesure (4a) émis par l'émetteur (5), un rayon laser en particulier, restant après le passage sur le cylindre d'encollage (1), est reçue par un photorécepteur (6).

4. Etiqueteuse suivant l'une au moins des revendications précédentes, caractérisée en ce que l'émetteur (5) et le récepteur (6) sont disposés en vis-à-vis sur un axe et sont de préférence maintenus par un support commun (8).

5. Etiqueteuse suivant l'une au moins des revendications précédentes, caractérisée en ce que l'émetteur (5) et le récepteur (6) sont disposés au voisinage d'une extrémité du cylindre d'encollage (1), au voisinage de l'extrémité supérieure, de préférence, d'un cylindre monté à la verticale.

6. Etiqueteuse suivant l'une au moins des revendications précédentes, caractérisée en ce que le dispositif d'analyse (7), relié à l'émetteur (5) et au récepteur (6), affiche l'épaisseur (D) du film de colle enregistrée et/ou émet un signal, analogique en particulier, correspondant à l'épaisseur de film (D).

7. Etiqueteuse suivant l'une au moins des revendications précédentes, caractérisée en ce qu'un dispositif de commande (9) est associé à la spatule (2) pour régler le jeu libre entre la surface d'enveloppe (10) du cylindre d'encollage (1) et la spatule (2), le jeu étant de préférence réglé en fonction de l'épaisseur (D) établie du film de colle.

8. Etiqueteuse suivant l'une au moins des revendications précédentes, caractérisée en ce que l'épaisseur du rayon de mesure (4a), émis par l'émetteur (5), correspond au moins à la plage de réglage admissible, dans le fonctionnement de l'étiqueteuse, de l'épaisseur (D) du film de colle.

9. Etiqueteuse suivant l'une au moins des revendications précédentes, caractérisée en ce que l'écartement radial entre le rayon de mesure (4a, b) et l'axe de rotation (30) du cylindre d'encollage (1) est réglable.
